# EUROPEAN PATENT APPLICATION

(11) **EP 3 742 538 A1**
(43) Date of publication of application: **25.11.2020**
(21) Application number: 19176056.0
(22) Date of filing: 23.05.2019
(51) Int. Cl.: H01M 10/42, H01G 11/08, H01G 11/10, H01R 13/66, H01R 13/68, H01R 31/06, H01M 2/20, H01G 11/76

(54) **ASSEMBLY HAVING A BATTERY MODULE OR PACK AND A BATTERY MANAGEMENT SYSTEM, AN ADAPTER FOR SUCH AN ASSEMBLY AND A METHOD FOR REPAIRING SUCH AN ASSEMBLY**

(71) Applicant: Rogers BV, 9940 Evergem (BE)
(72) Inventor: Ying, Feng, Suzhou, Jiangsu 215122 (CN)
(74) Representative: Müller Schupfner & Partner Patent- und Rechtsanwaltspartnerschaft mbB

(57) **Abstract**

An assembly (1) having a battery module or pack (3), in particular including a bus-bar, and a battery management system (4), wherein a first signal pathway (11) is assigned to the battery module or pack (3) and a second signal pathway (12) is assigned to the battery management system (4), wherein the first signal pathway (11) differs from the second signal pathway (12), wherein the assembly (1) includes an adapter (2) for connecting the first signal pathway (11) and the second signal pathway (12).

## Description

The present invention concerns an assembly having battery module or pack and battery management system, an adapter for such an assembly and an easy and fast method for repairing such an assembly.

It is well known in the prior art to use battery management systems to manage a rechargeable battery module or pack, for example for protecting the battery from operating outside its safe operating conditions, monitoring its state, calculating secondary data, reporting that data, controlling its environment, authenticating it and / or balancing it.

For communication with the battery management system, a corresponding connection to the busbar used on battery module or pack or super/ultra-capacitor module or pack has to be established. For example, US 2017 0 005 315 A1 shows a battery pack having an electrical interface for providing signals that for example can be used by the battery management system. Typically, printed circuit board (PCB) or flexible printed circuits (FPC) are used at the battery module or pack to provide or to transfer control signals. Such printed circuits represent signal pathways that in general differ from those signal pathways used by the battery management system. This makes it difficult to realize the connection and prones for defects that are caused by a difficult connection process. As a consequence, essential parts of the systems have to be exchanged due to this comparable small defect, realized during connecting.

Considering the above, it was an object of the present invention to realize a method to simplify connecting the signal pathways of a battery module or pack, and the signal pathways of the battery management system.

This object is achieved by an assembly having battery module or pack and a battery management system according to claim 1, an adapter for such an assembly according to claim 9 and a method for repairing such an assembly according to claim 10. Preferred embodiments are incorporated in the dependent claims, the description and the figures.

A first aspect of the present invention is an assembly having a battery module or pack, in particular including a busbar, and a battery management system, wherein a first signal pathway is assigned to the battery module or pack and a second signal pathway is assigned to the battery management system, wherein the first signal pathway differs from the second signal pathway, e. g. by their electrical conditions, wherein the assembly includes an adapter for connecting the first signal pathway and the second signal pathway.

Contrary to the state of the art, it is provided according to the present invention to use an adapter as an interface between the first signal pathway and the second signal pathway. By using the adapter, the connecting process between the battery module or pack and the battery management system can be simplified and therefore improved. Especially, the adapter is formed or configured such that connecting the first signal pathway and the second signal pathway, respectively, to the adapter is simplified. Thereby the adapter particularly takes into account the specifics of the first signal pathway as well as of the second signal pathway that differ from each other. The term "signal pathway", i. e. the first signal pathway and the second signal pathway, are generic terms for the electrical conditions, such as the wire structures and/or cable structures and/or protocol types used by the battery management system on the one hand and by the battery module or pack on the other hand. For example, the first signal pathway and the second signal pathway differ regarding the type of wiring that is used in the battery management system or in the battery module or pack. Preferably, the adapter provides terminals and/or ports adapted to the respective type of wiring, used in the battery management system or battery module or pack. Especially, it is provided that the adapter is configured for a plurality of first signal pathways and a plurality of second signal pathways. That means: the adapter forms an interface for several first and second signal pathways for concentrating the connection between the wires of the battery management system and the wires of the battery module or pack to one section of the assembly, namely to the adapter. Preferably, it is provided that the adapter is a separate component. However, it is also provided, according to an embodiment of the invention, that the adapter is a part of the battery management system and/or the battery module or pack. In particular, the assembly is incorporated in a vehicle, especially for providing electric power, intended for driving the vehicle.

According to a preferred embodiment of the present invention, the adapter is interchangeable. Preferably, the adapter is configured for a reversible connection. For example the adapter can be plugged to the battery module or pack, in particular to the busbar and/or a casing of the battery module or pack. Thus, the adapter can be removed and a new adapter can be inserted into the assembly for connecting the first signal pathways and the second signal pathways. As a result, the adapter can be easily exchanged, when the adapter has a defect, for example caused during the connection process and/or in use of the assembly.

Preferably, it is provided that the first signal pathway is at least partially formed by a flexible printed circuit (FPC). Such a flexible printed circuit (FPC), particularly comprises metal sheets having a thickness of less than 300µm, preferably a thickness between 50µm and 10µm. Thus, the adapter can be specified to such wires, typically used for signal control and/or signal communication with the battery management system. Such a thin wiring needs a specific connection to the terminals of the adapter, and using the adapter prevents the assembly from directly connecting the thin metal sheets of a flexible printed circuit (FPC) to a comparable thick wiring of the battery management system.

In one embodiment of the present invention, it is provided that the battery module or pack includes a busbar and/or a plurality of capacitors. Such a busbar is preferably a "flat" or laminated product and comprises at least one mainly unstructured metal layer. Preferably, the busbar forms a carrier, to which several capacitors are connected. Thus, the busbar can collect and distribute the electrical power, stored in the plurality of capacitors, which for example are arranged on a top side of the busbar. Preferably, the busbar extends along a main extension plane and has a thickness, measured in a direction perpendicular to the main extension plane, which is larger than 1.5 mm, more preferably larger than 2.5 mm and most preferably larger than 4 mm.

In another embodiment of the present invention, it is provided that the adapter includes at least one fuse, preferably a plurality of fuses to protect the short circuit and over current defect. For example, the fuse is assigned to a pair of first signal pathway and second pathway that are connected to each other via the adapter. By including the fuses into the adapter, it is simplified to remove and/or exchange the adapter, when the fuses melt for example. Otherwise you need to remove the whole battery module or pack and/or battery management system, when a fuse of the adapter is melt in the corresponding part of the assembly. Especially realizing the fuse in the adapter allows excluding the fuses from the battery management system and the battery module or pack and concentrates the fuses in the adapter. In particular, all fuses of the assembly or a majority of fuses of the assembly are included in the adapter.

Especially, it is provided that the adapter includes a printed circuit board (PCB). Such a printed circuit board (PCB) can for example be used to provide third signal pathways, arranged on the adapter for connecting ports or terminals, which are provided for connecting the first signal pathway to the adapter, and/or ports, intended for connecting the second signal pathway to the adapter. The printed circuit board (PCB) can be ordinary and metal ceramic substrate as well. Such metal ceramic substrates typically have a high dielectric strength and a comparable high thermal conductivity, such that they can even be used under extreme conditions, for example regarding a temperature of a surrounding, into which the assembly is incorporated for a specific application.

According to another embodiment of the present invention, it is provided that the adapter is arranged next to the battery module or pack, in particular next to the busbar. For example, the adapter can be directly connected to the flexible printed circuit (FPC), representing a first signal pathway, which is comparable thin. Therefore, by arranging the adapter next to the battery module or pack, the thin flexible printed circuit (FPC) has not be extended to a specific location between the battery management system and the battery module or pack.

Another benefit of using the adapter is flexibility for locating the adapter between the battery management system and the battery module or pack, in particular depending on the planned application. For example, it might be reasonable to locate the adapter separated, i.e. spatially spaced, from the battery module or pack due to some installations requirements of the battery module or pack. By using the adapter, it is therefore advantageously possible to flexibly arrange or locate the adapter between the battery module or pack system and the battery management system.

According to another preferred embodiment of the present invention, it is provided that the adapter has a first coupling member for connecting the adapter to the first signal pathway and a second coupling member for connecting the adapter to the second signal pathway. As a consequence, it is advantageously possible to simplify connecting the first signal pathway to the adapter and/or the second signal pathway to the adapter. For example, the first coupling member and/or the second coupling member includes ports or terminals, for example plug-in ports and/or terminals, for reversible connecting the first signal pathway and the second signal pathway respectively to the adapter, for example by using clamping elements that fixes the first signal pathway and/or the signal pathway in a mounted state of the assembly. Alternatively, it is also conceivable that the terminals and/or ports includes luster terminals. Preferably, the terminal and/or ports are configured such that they can allow adhesively connecting the first signal pathway and/or the second signal pathway to the ports and/or terminals of the first coupling member and/or the second coupling member, for example by welding and/or soldering.

According to another aspect of the present invention is an adapter for an assembly according to the present invention. All features and benefits, mentioned above in context of the assembly applies analogously to the adapter and visa versa.

Another aspect of the present invention is a method for repairing and/or providing an assembly according to the present invention, wherein the adapter is connected to the first signal pathway and the second signal pathways. All features and benefits, mentioned above analogously apply to the method for repairing and/or providing the assembly and visa versa. Especially, it is provided to remove the adapter when the adapter has a defect, for example caused by a default connection and/or by a melted fuse. Thus, it is simplified to prepare and maintain the assembly including the battery management system and the battery module or pack and the adapter.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- Fig. 1: schematically shows a system according to a preferred embodiment of the present invention and
- Fig. 2: schematically shows an adapter according to a preferred embodiment of the present invention.

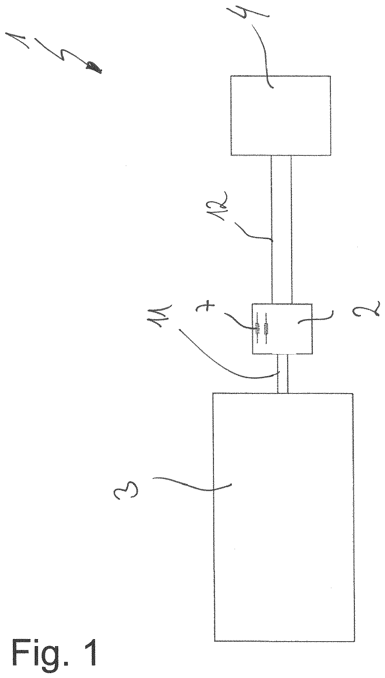

In **Figure 1****,** an assembly 1 having a battery module or pack 3 and a battery managing system 4 according to a preferred embodiment of the present invention is shown. In an embodiment of the invention, the battery module or pack 3 includes at least one battery package and a busbar, wherein a plurality of capacitors (not shown) are arranged on top of the busbar or at least are connected to the busbar. The busbar, in turn, is intended for collecting and distributing electrical power of the plurality of capacitors, which are arranged on top of the busbar. The busbar extending in a main extending plane preferably forms a carrier for the electrical components (not shown) that are directly arranged on the busbar, preferably on a top side of the busbar. Preferably, a first conductive layer of the busbar is covered by an isolation layer, which allows arranging the capacitors directly on the first conductive layer. Especially, the busbar comprises a first conductive layer extending in the main extending plane and has a connector for representing a common pole of the busbar that collects the contributions of several first kind of poles of the capacitors and provides the electrical energy for some application, preferably for an electric motor drive. Besides the first conductive layer, preferably a second conductive layer is provided, wherein the second conductive layer extends parallel to the first conductive layer.

The busbar, in particular the first conductive layer and/or the second layer, forms a flat or laminated product, i. e. the extension of the busbar in the main extending plane is several times larger than the thickness of the busbar measured in a direction perpendicular to the main extending plane and the first and/or the second conductive metal layer are mainly unstructured. Especially, the busbar has a thickness measured in a direction perpendicular to the main extension plane between 0.5 mm and 6 mm, more preferably between 3 mm and 6 mm and most preferably between 4.5 and 5.5 mm. In particular, the material of the first conductive layer and the second conductive layer are configured such that the busbar, at least parts of the busbar, can be deformed without affecting the functionality of the first and second conductive layer. Thus, the busbar can easily adapted to the space to which the busbar or the assembly 1 including the busbar should be incorporated to, for example by bending a part of the busbar.

Further, the second conductive layer comprises at is outer periphery another connector for representing a common pole of the busbar that collects the contributions of a second kind of poles of the several capacitors in order to provide the electrical power to an application. Those busbars are used, for example in vehicles, driven by electrical motors.

It is known to use printed circuit board (PCB) or flexible printed circuits (FPC), connected to the busbar, for signal control, in order to establish a communication, i. e. a data transfer, between the battery module or pack 3 and a battery management system 4. A battery management system 4 (BMS) is any electronic system that manages a rechargeable battery (cell or battery module or pack), such as by protecting the battery from operating outside its safe operating conditions, monitoring its state, calculating secondary data, reporting that data, controlling its environment, authenticating it and / or balancing it.

The flexible printed circuit (FPC) is an example for a first signal pathway 11 and maybe includes a metal sheet, which has a thickness of less than 300µm, preferably at a thickness between 30µm and 80µm. Consequently, the ratio of the thickness of a metal sheet to the thickness of a busbar is between 0.005 and 0.02, more preferably between 0.0075 and 0.15, and most preferred about 0.01, measured in a direction perpendicular to the main extension plane. In other words: the thickness of the busbar is several times larger than the thickness of the metal sheet.

Preferably, the terms "first signal pathway" 11 and "second signal pathway" 12 represent generic terms for various types of cable or wirings that are used in the battery management system 4 or the battery module or pack 3 respectively for conducting electrical control signals. Especially, the first pathways 11 and the second pathway 12 differ from each other, for example regarding their length, diameter, form and/or type. For example, the flexible printed circuit (FPC), used by the battery module or pack 3 and preferably adhesively connected to the busbar, is formed by a thin metal sheet, whereas the cables of the battery management system 4 have a thick circular diameter compared to the thin metal sheet of the flexible printed circuit (FPC). Therefore, it is difficult and expensive to change the connector and the cable of the battery management system 4 or the battery module or pack 3. For connecting the first signal pathway 11 and the second signal pathway 12 with each other an adapter 2 is provided. Such an adapter 2 is a separate component that can be reversibly connected to the first signal pathway 11 of the battery module or pack 3 and the second signal pathway 12 of the battery management system 4. Preferably, the adapter 2 represents an interface arranged between the battery module or pack 3 and the battery management system 4.

For example, the adapter 2 includes a first coupling member 21 for connecting the adapter 2 to the first signal pathway 11 and a second coupling member 22 for connecting the adapter 2 to the second signal pathway 12. By using the adapter 2 it is possible to connect the first signal pathway 11 and the second signal pathway 12 as provided by the battery management system 4 and the battery module or pack 3, without modifying the first signal pathway 11 and the second signal pathway 12. Further, connecting the first signal pathway 11 and the second signal pathway 12 is simplified. Especially, the probability of defaults, caused during the connection process can be reduced. Preferably, the adapter 2 includes fuses 7. By incorporating such fuses 7 into the interchangeable adapter 2, it is advantageously possible to remove the adapter 2, when one of the fuses 7 cracks or when one of the fuses 7 has blown. Instead of removing the whole battery module or pack i.e. the battery module or pack 3 or battery management system 4, it is only necessary to provide a new adapter 2 that can be plugged between the battery management system 4 and the battery module or pack 3.

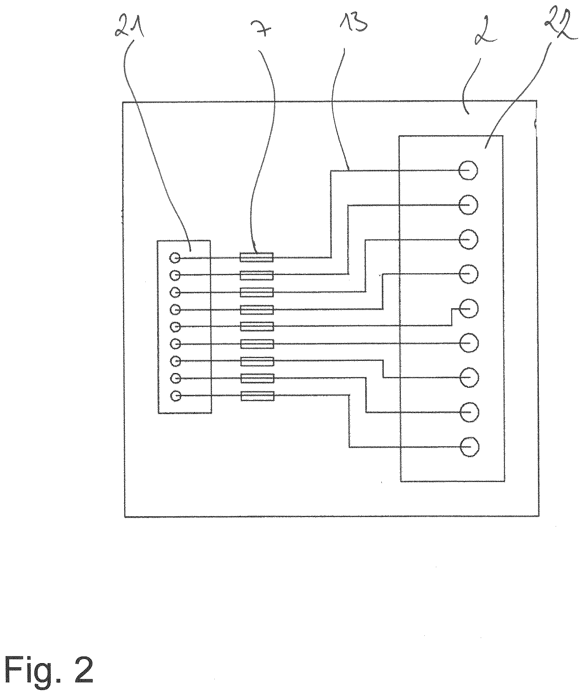

In Figure 2, an example for an adapter 2 according to the present invention in a preferred embodiment is illustrated. Especially, Figure 2 shows the first coupling member 21 as well as the second coupling member 22. For example, the first coupling member 21 and/or the second coupling member 22 includes terminal or ports for plugging the corresponding first signal pathways 11 and/or second signal pathways 12 to the adapter 2. The first coupling member 21 and/or second coupling member 22 may include male and/or female ports for connecting the adapter 2 to the respective first signal pathway 11 of the battery module or pack 2 or the second signal pathway 12 of the battery management system 4. For example, terminal or orts, shown in Figure 2, might be realized by luster terminals. In particular, each port of the first coupling member 21 is connected with a corresponding port of the second coupling member 22 via a third signal pathway 13. In particular, the third signal pathway 13 includes the fuse 7. Preferably, the fuses 7 are arranged on the adapter 2 such that there is free access to the fuses 7. Thus, it is even possible to interchange the fuses 7, when the fuses 7 are broken or damaged.

Furthermore, it is preferably provided to that the adapter 2 includes a printed circuit board (PCB), in particular realized as a metal ceramic substrate. Preferably, the special requirements of the battery module or pack 3, in particular used in a vehicle, are taken into account and the adapter 2 has a corresponding long durability. It is also conceivable that the first coupling member 21 and/or the second coupling member 22 includes pin-like elements and/or plug-in elements, for example press fit element, for simplify connecting the first signal pathway 11 to the first coupling member 21 and/or connecting the second signal pathway 12 to the second coupling member 22.

It is also conceivable that the assembly 1 includes a mechanically coupling unit or section for directly coupling the adapter 2 mechanically to the battery module or pack 3, in particular to the busbar. For example, the battery module or pack 3 has a mechanical interface for plugging the adapter 2 to the battery module or pack 3, such that connecting of the adapter 2 to the battery module or pack 3 is simplified. Thus, the relative orientation of the ports to the first signal pathways 21 can be supported. Preferably, the adapter 2 is arranged next to the battery module or pack 3 in the mounted state of the assembly 1.

### Reference signs:

- 1: assembly
- 2: adapter
- 3: battery module or pack
- 4: battery management system
- 7: fuse
- 11: first signal pathway
- 12: second signal pathway
- 13: third signal pathway
- 21: first coupling member
- 22: second coupling member

## Claims

1. An assembly (1) having a battery module or pack (3), in particular including a busbar, and a battery management system (4), wherein a first signal pathway (11) is assigned to the battery module or pack (3) and a second signal pathway (12) is assigned to the battery management system (4), wherein the first signal pathway (11) differs from the second signal pathway (12), wherein the assembly (1) includes an adapter (2) for connecting the first signal pathway (11) and the second signal pathway (12).

2. The assembly (1) according to claim 1, wherein the adapter (2) is interchangeable.

3. The assembly (1) according to one of the preceding claims, wherein the first signal pathway (11) is at least partially formed by printed circuit board (PCB) or flexible printed circuit (FPC), wires inside milling slot and other connection types.

4. The assembly (1) according to one of the preceding claims, wherein the adapter (2) includes at least one fuse (7).

5. The assembly (1) according to one of the preceding claims, wherein the adapter (2) includes a printed circuit board (PCB).

6. The assembly (1) according to claim 5, wherein the printed circuit board (PCB) can be an ordinary substrate or a metal ceramic substrate.

7. The assembly (1) according to one of the preceding claims, wherein the adapter (2) is arranged next to the battery module or pack (3), preferably next to the busbar.

8. The assembly (1) according to one of the preceding claims, wherein the adapter (2) has a first coupling member (21) for connecting the adapter (2) to the first signal pathway (11) and a second coupling member (22) for connecting the adapter (2) to the second signal pathway (12).

9. An adapter (2) for an assembly (1) according to one of the preceding claims.

10. A method for repairing and/or providing an assembly (1) according to the present invention, wherein the adapter (2) is connected to the first signal pathway (11) and the second signal pathways (12).

## Amended claims

### Amended claims in accordance with Rule 137(2) EPC.

1. An assembly (1) having a battery module (3), in particular including a busbar, and a battery management system (4), wherein a first signal pathway (11) is assigned to the battery module (3) and a second signal pathway (12) is assigned to the battery management system (4), wherein the first signal pathway (11) differs from the second signal pathway (12), wherein the assembly (1) includes an adapter (2) for connecting the first signal pathway (11) and the second signal pathway (12), **characterized in that** the adapter (2) includes at least one fuse (7).

2. The assembly (1) according to claim 1, wherein the adapter (2) is interchangeable.

3. The assembly (1) according to one of the preceding claims, wherein the first signal pathway (11) is at least partially formed by a flexible printed circuit.

4. The assembly (1) according to one of the preceding claims, wherein the adapter (2) includes a printed circuit board.

5. The assembly (1) according to claim 4, wherein the printed circuit board is a metal ceramic substrate.

6. The assembly (1) according to one of the preceding claims, wherein the adapter (2) is arranged next to the battery module (3), preferably next to the busbar.

7. The assembly (1) according to one of the preceding claims, wherein the adapter (2) has a first coupling member (21) for connecting the adapter (2) to the first signal pathway (11) and a second coupling member (22) for connecting the adapter (2) to the second signal pathway (12).

8. An adapter (2) for an assembly (1) according to one of the preceding claims.

9. A method for repairing and/or providing an assembly (1) according to one of the preceding claims, wherein the adapter (2) is connected to the first signal pathway (11) and the second signal pathways (12).
